# EUROPEAN PATENT SPECIFICATION

(11) **EP 4 219 090 B1**
(45) Date of publication and mention of the grant of the patent: **13.05.2026**
(21) Application number: 23000006.9
(22) Date of filing: 10.01.2023
(51) Int. Cl.: B25J 11/00, G06F 3/01

(54) **TELEPRESENCE IN PERSON TO A ROBOT**
TELEPRÄSENZ VON PERSONEN AN EINEN ROBOTER
TÉLÉPRÉSENCE D'UNE PERSONNE À UN ROBOT

(30) Priority: 17.01.2022 DE 102022000355
(43) Date of publication of application: 02.08.2023
(73) Proprietor: Sakarya, Taskin, 35630 Ehringshausen (DE)
(72) Inventor: Sakarya, Taskin, 35630 Ehringshausen (DE)

(56) References cited:
- US-A1- 2012 038 739
- US-B1- 6 836 286
- US-B2- 6 879 879
- TACHI SUSUMU: "Telexistence", 1 April 2015, 20150401, PAGE(S) 229 - 259, XP047648853
- JURI FUJII ET AL: "COLORISE", TANGIBLE, EMBEDDED, AND EMBODIED INTERACTION, ACM, 2 PENN PLAZA, SUITE 701NEW YORKNY10121-0701USA, 9 March 2018 (2018-03-09), pages 199 - 204, XP058387412, ISBN: 978-1-4503-5568-1, DOI: 10.1145/3173225.3173228
- GOO HIDEKI GARCIA ET AL: "An Antisocial Social Robot: Using Negative Affect to Reinforce Cooperation in Human-Robot Interactions", 2019 14TH ACM/IEEE INTERNATIONAL CONFERENCE ON HUMAN-ROBOT INTERACTION (HRI), IEEE, 11 March 2019 (2019-03-11), pages 763 - 764, XP033532165, DOI: 10.1109/HRI.2019.8673264

## Description

### Summary

This invention is about a robot at a remote location which is connected to a real person or a thing within a 3D-Modelling-System at a local place where the robot changes its shape to match exactly to the person(s) or things(s) at the local place.

The invention is defined by the features of independent claims 1 and 10. Preferred embodiments are defined by the dependent claims.

In a telepresence environment, persons or things in one place can be virtually presented at a remote place as holographic 3D presentation either in a task-ins-cubicle achieving full communication and interaction at the remote place as described in the following own patents.
DE-Patent: DE 10 2012 007 441 B4
PCT: EP2013/002769
US-Patent: US 10,728,496 B2
UK-Patent: GB2536370
Indian Patent Application No. 201617012621

The quality of the holographic view depends on the quality of the screens and the transmission. Blind people has no benefit from the holographic presentation. Both of these drawbacks can be solved and the telepresence can be brought to a more real situation, in case the person appears on the remote site as touchable real person. This can be achieved, in that the 3D modelling made at the local site, for example using task-ins-cubicle local version, the remote site can utilize a morphing of a preliminary setup, for example a humanoid robot, via inflatable modelling system to present this 3D model as close to the real one as possible. Another perfect setup would be to get the 3D Modelling of the person(s) from one or more 3D Modelling Systems for example task-ins-cubicles and then bring them together in a virtual or semi-virtual environment, with their real, current appearance of the persons and things modelled.

Robot at the remote site has at least for the front view a multimedia-system, integrating video-audio and control information and sending these back to the local 3D-Modelling-System, for example task-ins.-cubicle-local at the local site, so the person there feels to be at the remote site and can move around walking for example on a mechatronic walking-band, and also can move the hands of the robot synchronised with own, can also see the actions locally of course. This applies both to real and to virtual environments.

### Need

It is a very big advantage to make a near real presentation of the person that appears at the remote site, because it is not any more dependent on the quality of the transmission or on the quality of screens as in task-ins-cubicle. As the occupied space is also smaller, its usage is more practical.

On the other hand, because it is considered a big advantage to introduce not only a static model, i.e., there is need to have walking and talking abilities. So a robotics system could be employed. But not a robotics system that is remotely controlled and have own intelligence, but instead a robotics system that is coupled to a 3D-Modelling-System, for example task-ins-cubicle local and can be used as a telepresence hardware. i.e., decision making actions can be directly made via the person(s) within connected 3d-modelling-system for example task-ins-cubicle local.

On the other hand, the remote robot should resemble exactly to the person in task-ins-cubicle local. So, it is a robot that morphs itself to the person situated at a remote place.

By telepresence, a robotic presentation of the person at another site with many robotics abilities such as walking, moving functional arms, legs and hands and such as talking, with moving lips according to the spoken language, i.e., audible output would be a very big advantage for handling different tasks from a distance and for socialising.

By telepresence, there is need that a local real person is connected to self as a hard duplicate but as own person with all actions and but also as important combines the advantages of task-ins-cubicle system, i.e., is able to feel himself/herself at the remote location.

A hard appearance of the person makes it easier with blind people to interact too as they can not only hear the person at the remote site, but they can also feel the presence of the person.

### COMPARISON OF OUR INVENTION WITH THE DOCUMENTS IN THE SEARCH REPORT IN TERMS OF THE INVENTION STEP CRITERIA:

### D1: TACHI SUSUMU, Telexistence, 20150401, XP047648853

### 244 S. Tachi

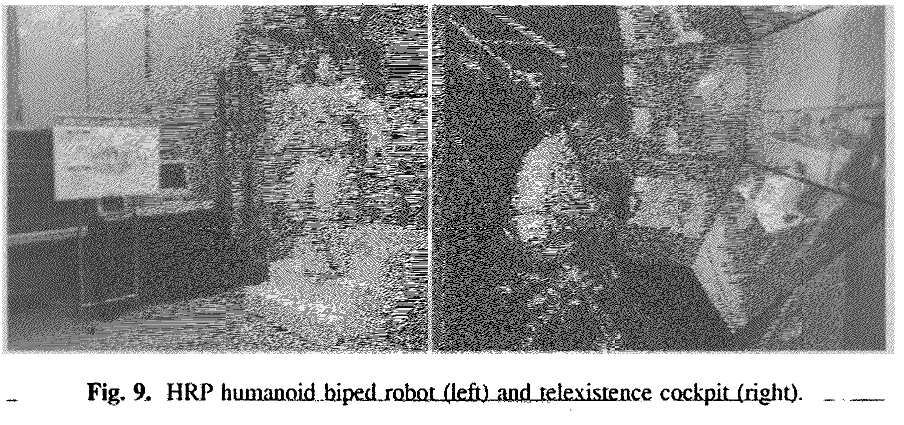

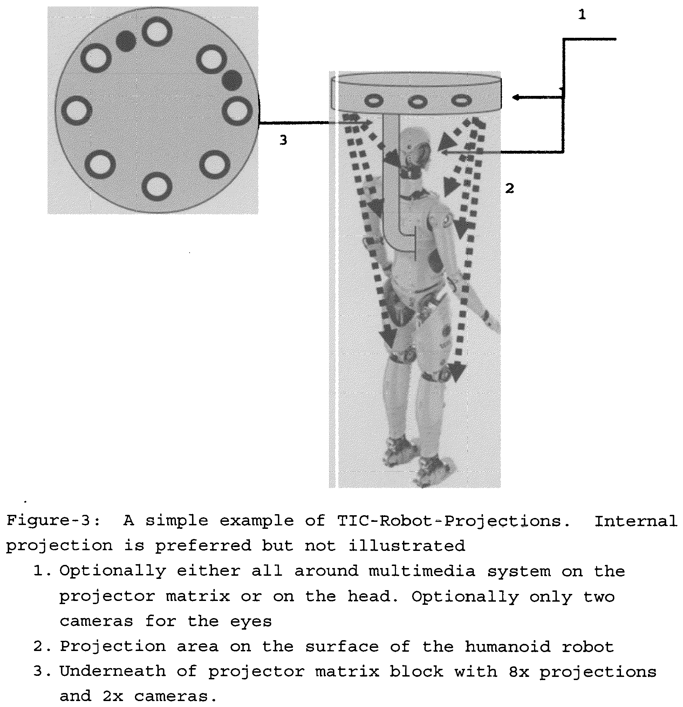

D1 Fig. 3 displays the expected telepresence or telexistence concept, however D1 in text does not seem to solve how the person in robotic form should look as a perfect duplicate of the person inside. D1 does not disclose how the person at the controls would have a perfect feeling of being at the remote site.

In TIC-Robot application, the person in Task-Ins-Cubicle is able to see all the surroundings of the TIC-Robot with the highest resolution screens and the persons movements are immediately transferred to the TIC-Robot as there are cameras all around the cubicle to detect every action of the person inside without any additional gadget or device.

D1 Fig. 9 displays on the right side how the person at the control side wears sensorics devices to generate control information and sees into different 2D views to have feedback from the actual robot movements. This wearing sensorics devices is not comfortable and easy to handle and cannot be really used for long time. It is therefore commercially not expected to be accepted by others. In fact, it is a known fact that 3D TV has lost interest from end-users due to wearing strange glasses and share a social environment i.e., living room with these uncomfortable strange glasses. With 3D Goggles this is even worse in terms of comfort.

TIC-Robot control system task-ins-cubicle-local does not use any wearables for movements. Since cameras are positioned all around the cubicle inside these detect all the movements of the person including running or walking, i.e., on a mechatronic walking band, and send these to the TIC-Robot for duplication.

D1 Fig. 9 displays on the left side the telepresence robot, however this is different from expected target result of Fig.3, i.e., robot appears as robot. It is in fact a problem and it is in fact impossible to generate a person live and dynamic and with actual normal appearance and mimics to pass these to the robot, since the appearance of the person at the control unit is not without strange looking gadgets and gloves and apparatus.

Since TIC-Robot control system task-ins-cubicle-local does not contain such wearables, the person inside can appear live with mimics with face-to-face, eye-to-eye contacts and with proper duplication of the person.

D1 Fig. 10 displays on the right side a person sitting at the control centre with a set of cameras in front and with hand control system. These cameras can only generate a 2D-View and therefore are not suitable to create a 3D-Model of the person sitting. Person has no immersive experience from the remote site. Robot is in fact standing so it is not possible to convey the real time information of the person on the robot.

Since TIC-Robot control system task-ins-cubicle-local does not contain such wearables, the person inside can appear live with mimics with face-to-face, eye-to-eye contacts and with proper duplication of the person.

D1 Fig. 10 displays on the left side a robot where it is recognition partially presented with fixed projectors across the robot. This is a big problem issue, since slightest movement of the robot would disturb the projection completely. It is also only a partial recognition, as can be seen from the dark i.e., black part presented as projected part. This is not a practical or a commercial solution as the robot must stay at a certain position and here in this picture 3x projectors must be fixed with adjustments and positions.

TIC-Robot is independent of such unpracticable stage setups. TIC-Robot produces high resolution duplication of the person at another site.

D1 Fig. 11 is another figure similar to Fig.10. It is clearly visible that the persons picture appears on the robot with a 2D-Projection on the front. This does not generate a real sense of the person being present at any location. It is a slightly improved version of video-conferencing system.

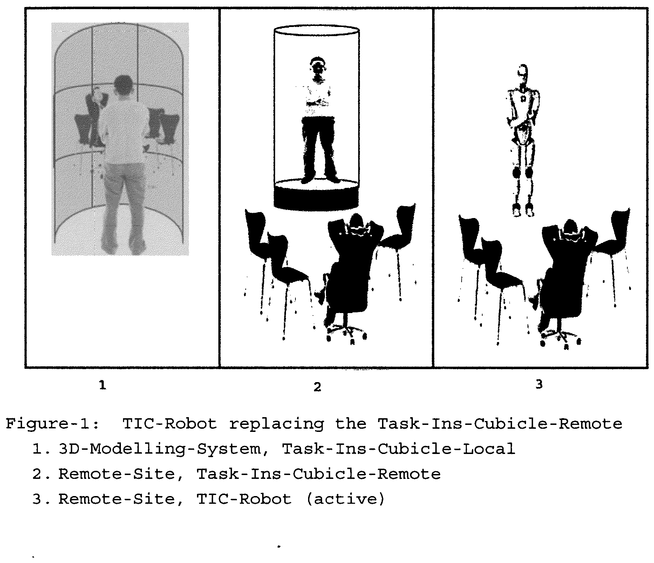

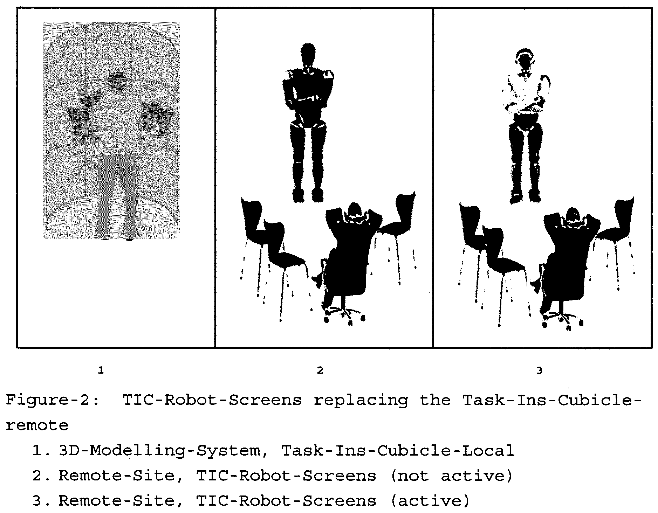

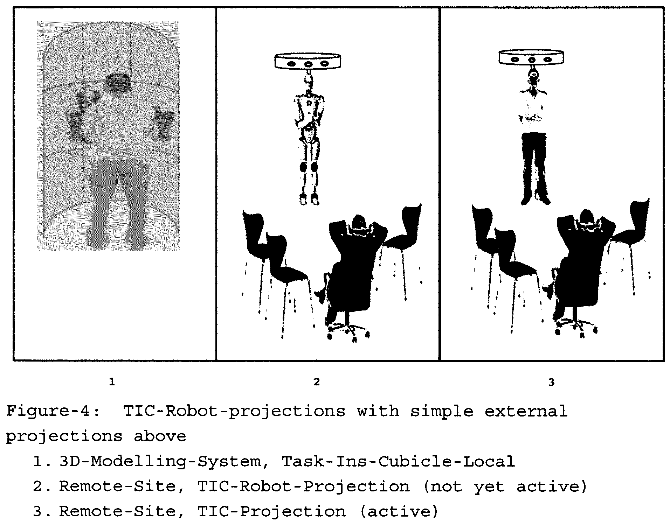

TIC-Robot and its claims provide a perfect production of the person in a local task-ins-cubicle, i.e., in the immersive control system, with new technics and innovative steps.
1. TIC-Robot reproduction is not limited to persons. TIC-Robot can be constructed to duplicate certain animals and in fact anything which is placed in the middle of the control centre i.e, task-ins-cubicle.
2. TIC-Robot reproduction is not limited to task-ins-cubicle. In fact, any similar inputs provided from task-ins-cubicle can be provided from anywhere for example any 3D-Modelled video input combined with audio and control information can be used to employ the same TIC-Robot to reproduce for example virtual models.
3. Task-Ins-Cubicle-Local provides perfect and easy 3D-Modelling as it is constructed to achieve such without any additional apparatus on the person or a thing in the middle.
4. TIC-Robot reproduction of a person combines a set of new technologies as alternatives or as in combination to generate a better output. These technologies are listed again for clarity below.
   (a) Usage of flexible screens. For example, OLED screens. Fig.2. These screens are placed at different places all around the TIC-Robot and are mapped with view inputs from all around (many) cameras of the control site i.e., task-ins-cubicle-local. With this, the production is not 2D but a combination of many views in one TIC-Robot. This generates a more realistic presentation. However, note that it shall still be not perfect without the real physical morphism i.e.,, reshaping of the head and the body.
   (b) A similar approach to (a) appears with the usage of projectors. But the projectors are placed in a way to make the TIC-Robot reproduction as good as the screen option above. Although Fig.4 displays an external multi projector system to illustrate this, but in fact same approach is listed with internal projectors i.e., not above the head like a hat but for example inside the head and the body that one cannot see the projectors from outside. However, note that it shall still be not perfect without the real physical morphism i.e., reshaping of the head and the body.

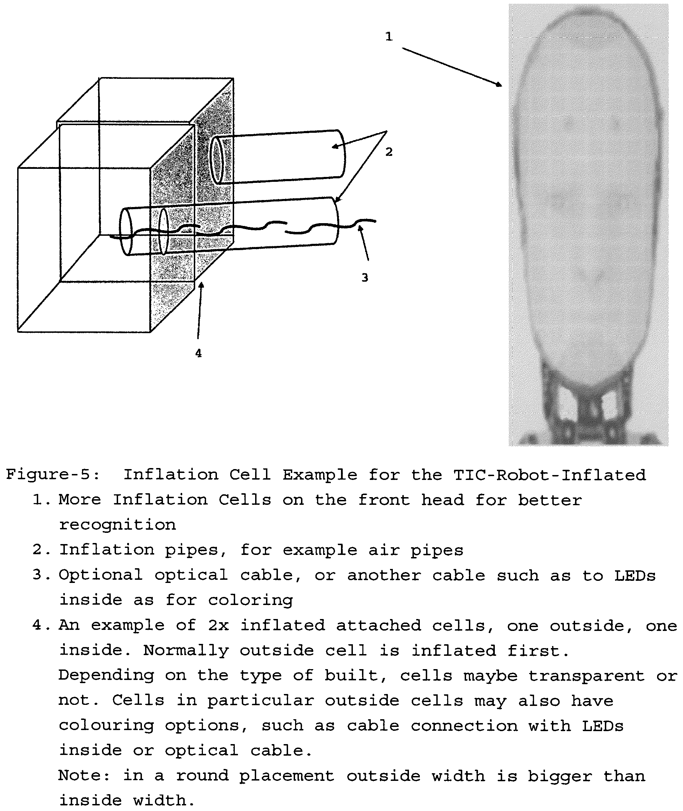

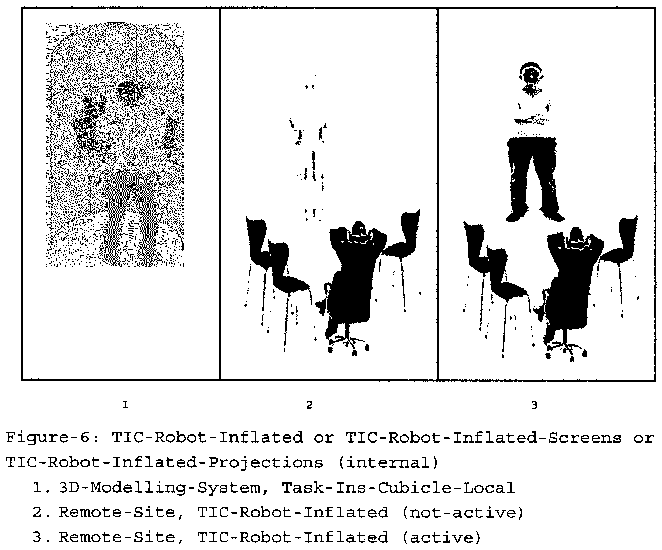

   (c) Fig. 5 illustrates a new inflatable structure in form boxes but not limited to this shape but this way it combines a better structure and growth. Please note that this is a layered structure, i.e., it combines not only one layer of inflatable cells but more of these as needed to generate more deepness for example around nose or ears or hair. Colouring option for these cells is provided in several technical solutions.
   (d) For the inflation not only gas but when needed water or liquid can be used.
   (e) Walls of the inflatable cells can be transparent depending on the colouring technic employed.
   (f) This morphing i.e., taking the shape of the person or animal or any other 3D-Modelled thing can be combined with above (a) i.e., flexible screens or any other screens underneath or above the morphing layers to achieve true-colours for reproduction.
   (g) This morphing i.e., taking the shape of the person or animal or any other 3D-Modelled thing can be combined with above (b) i.e., internal or external multi projectors to achieve true-colours for reproduction.
   (h) This morphing i.e., taking the shape of the person or animal or any other 3D-Modelled thing can be combined with inflatable cell internal optic fibres or LEDs which are controlled by the 3D-Input colours provided i.e., similar distribution as in the case of screens (one to one mapping with cameras into multi screens) with appropriate distribution of the cameras into cell colours in a 3D distribution.
5. Task-Ins-Cubicle-Local as is patented to the same organisation MOBILOTECH already provides a perfect solution to achieve 3D production and to combine all around cameras such that the person or an animal or a thing inside needs no extra apparatus. The curved high-resolution screens around provide an easy strong stereographical presentation of environments without uncomfortable goggles... This way one can communicate or work inside for a very long without feeling disturbed or uncomfortable. The movements like walking running of the person are achieved with for example running sport belt system with directional controls below. Hand and arm and foot and leg movement mouth movements eye directions presentations mimics .. everything are immediately recorded via multi camera system and 3D perfect presentation from all over are generated and then sent to remote sites. The innovative step to the already available own patent is the coupling of task-ins-cubicle-local with a real touchable person or animal or thing duplicate such that it replaces the task-ins-cubicle-remote in this innovative new step.

### D2: JURI FUJII ET AL, "COLORISE", TANGIBLE, EMBEDDED, AND EMBODIED INTERACTION

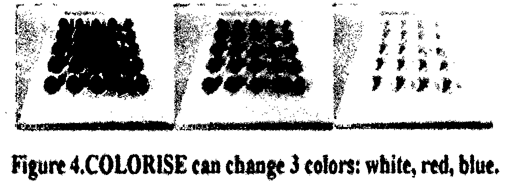

D2 is a document displaying a technical solution to make a screen display with limited number of colours. It has many different problems like the response time of colouring. Before a colouring can occur, the inflatable cells placed on a screen plate needs to be filled in appropriately and only inflating 2 different colours an attempt is made to achieve maximum 3 colours. It has not only performance and colouring issues but also very likely that the colours shall not have any contrasts because they come through other sheets within the same inflatable cell.

TIC-Robot uses transparent inflatable cells in case the colouring is implemented as part of the inflatable cells. TIC-Robot provides other alternatives such as internal or external projections and internal or external screens. TIC-Robot does not use a screen pixel based on a plate for a poor display but it has different layers of inflatable cells to achieve a certain shape which is a duplicate of an object within a local task-ins-cubicle.

### D3: US6879879 B2:

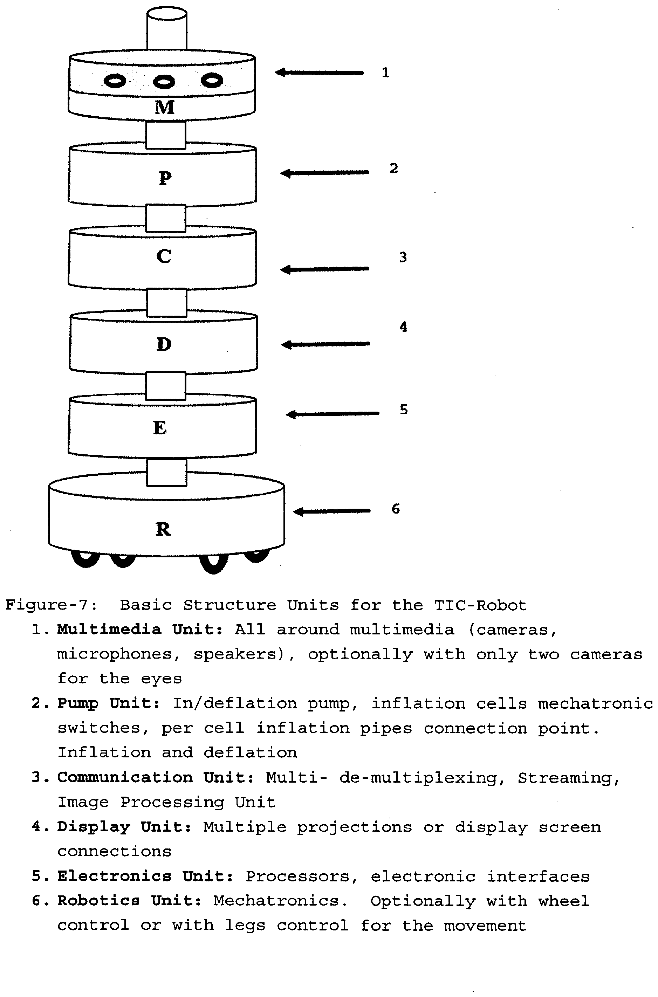

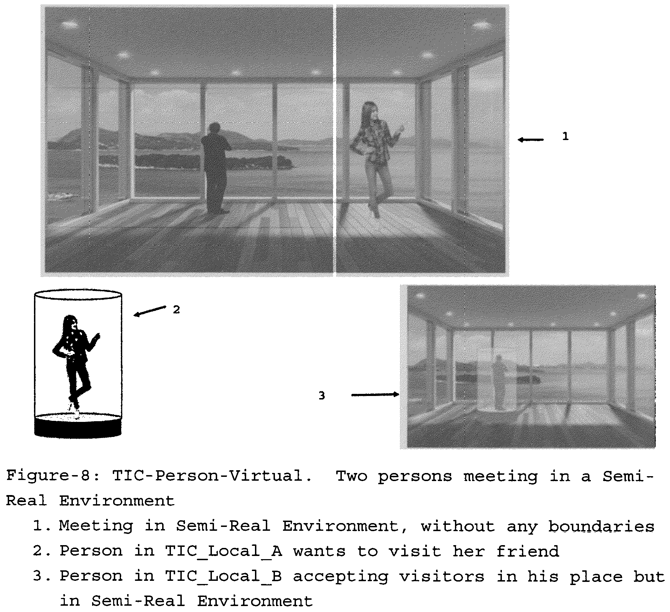

D3 figure 7 displays a mechanism how the height of the robot can be reduced in body part. This has the problem that it only reduces the height at a certain point. But the size of the body changes everywhere for example on the head, on the legs, arms, fingers etc.

TIC-Robot addresses all these parts and not just the height of the robot to adapt the size of the person to the remote duplicate. Therefore, the claim text is updated to clarify this point.

### D4: US2012038739

This patent provides an approach how a person's head can be mapped with a system in fact a 2D camera system and then algorithms to generate eventually a 3D view and then to map these to a animatronic head. It is not clear from the patent how real time dynamic telepresence can take place with these two staged approaches. In case of a virtual presentation of an avatar with this head mapping, the avatar would have one time copy of the 3D mapping.

TIC-Robot on the other hand makes a real time 3D-Generation within Task-Ins-Cubicle-Local and then transfers this in real time to a real or virtual TIC-Robot.

### D5: GOO HIDEKI GARCIA ET AL, "An Antisocial Social Robot: Using Negative Affect to Reinforce Cooperation in Human-Robot Interactions"

This document provides a touchable shape within which it contains inflatable spikes to warn a person touching it. It is used to the social behaviour analysis of people.

### D5: GOO HIDEKI GARCIA ET AL, "An Antisocial Social Robot: Using Negative Affect to Reinforce Cooperation in Human-Robot Interactions"

TIC-Robot uses inflatable cells in combination and in layers to generate different shapes and therefore it is a different technology and usage.

### D6: US 6,836,286 B1

This patent contains the similar technical approaches provided in the published document D1 from the same author.

D1 related comparison applies for D6 too.

### Terminology and Description of Different Systems:

**Task-Ins-Cubicle-Local:** refers to the patent referenced local cubicle where a person or thing can virtually travel to any other remote location. A virtual environment can also replace Task-Ins-Cubicle-Local.

**Task-Ins-Cubicle-Remote:** refers to the patent referenced remote cubicle where a person appears as a holographic view and can interact with the environment. A virtual environment can also replace Task-Ins-Cubicle-Remote.

**Task-Ins-Node:** refers to the patent referenced Task-Ins-Cubicle-Remote without display elements, i.e., a smaller version with camera, microphone and speaker systems.

**Task-Ins-Cubicle-System:** Both way communication including multiplexed audio-video-control transmission elements, in between Task-Ins-Cubicle-Local and Task-Ins-Cubicle-Remote where both can be placed in real environments or any one of them can be replaced via a Virtual or Semi-Real Environments.

**TIC:** short for Task-Ins-Cubicle.

**TIN:** short for Task-Ins-Node.

**Local Site:** refers to the place where the real person or thing is situated.

**Remote Site:** refers to the place where a "duplication" of the person appears and can interact with the environment. The environment can be real, semi-real or virtual.

**Semi-Real Environment:** A virtual environment, i.e., cloud, internet media, generated from an actual, real environment and presented live as virtual environment.

**3D-Modelling-System:** refers to any 3D-Modelling-System, even 2D to 3D conversion systems. Typically, however a task-ins-cubicle local where more actions can be taken. Whenever a task-ins-cubicle-local is referred in this application, it also includes task-ins-cubicle-local. Whenever task-ins-cubicle-local is referenced, it also includes other 3D-Modelling-Systems as well. So the joint text: 3D-Modelling-System including Task-Ins-Cubicle-Local, or Task-Ins-Cubicle-Local including other 3D-Modelling-Systems. In short the reference shall be Task-Ins-Cubicle-Local in the descriptions.

**TIC-Robot:** refers to a robot at the remote site, with which task-ins-cubicle-local communicates at the local site and the person at the local site finds herself/himself as own person at the remote site, observing all around and using the motoric capabilities of the robot as her/his own. Note that the people at the remote site however, cannot recognize the person from the local site, with vision only. Perhaps only with voice recognition. TIC-Robot does not limit itself to a human appearance. It can be in any shape with which Task-Ins-Cubicle-Local can communicate. Please note the height of the TIC-Robot may be made adaptable. So in case a child is in Task-Ins.-Cubicle-Local, then the TIC-Robot may change its height, length of different motoric units accordingly. This way a more realistic social communication is possible. Important to note that TIC-Robot has also a multi-media-system similar to Task-Ins-Node as needed for the communication. Optionally instead of all-around-camera system, only the vision area system i.e., cameras for the eyes only can be built. Robots movement can be either with robot's legs and feet as human movement, it can be done also with simple wheels or rollers underneath.

Screens: refer to any type of displayable screens, monitors, such as LCD, LED, OLED, transparent, flexible, but not limited by this list. A flexible screen would probably be easier to mount on round surfaces.

**TIC-Robot-Screens:** refers to TIC-Robot built with display screens, or surface colouring features like built in LEDs on the surface, or flexible screens placed, such that the vision of the person at the local site is completely transferred to the robot's surface, such that people at the remote site can see or recognize the person with this person's own appearance as well.

**TIC-Robot-Projections:** refers to TIC-Robot built with projection tools which project the view of the person to the surface of the robot. Please note although drawings show a projection system from above, TIC-Robot-Projections does not limit the position of the projectors. It can be above, it can be below and even better it can be inside the robot itself so no extra body is visible. In fact, inside the body of the robot makes it much easier to handle in terms of usage, quality, implementation and usage.

**Inflatable-Cells:** refer to extendable cells with pre-allocated shapes. Just for a simple comparison a balloon is an inflatable-cell. Typically, the size and the shapes of these cells shall be the same. But this application does not limit the cell size or shape. One can even design different face elements with it as complete pieces. This approach will reduce the number of cells needed but make it difficult to combine them. Inflatable cells of similar sizes can be combined as attached cells so first the outside cell can be inflated and as per need then the inside cells can be inflated. Inflatable Cells may contain colouring options, i.e., LED's inside connected with cable, or optic cable to bring colours inside, and an inflating pipe. This application does not limit the used inflating material, it can be air, or another gas media, or it can be liquid like water or another liquid. Inflatable Cells are in some cases expected to be transparent, for example in case they are over the camera units, or over displays or LEDs.

**TIC-Robot-Inflated:** refers to TIC-Robot with Inflatable Cells. In case TIC-Robot-Inflated shall be used without any colouring option, then Inflatable-Cells may have pre-allocated colours for the head, hair and body. TIC-Robot-Inflated gets the 3D Model Info of the person or the thing inside the Task-Ins-Cubicle-Local and then shapes itself i.e., morphs to this shape.

**TIC-Robot-Inflated-Screens:** refers to a combined structure of TIC-Robot-Screens and TIC-Robot-Inflated with transparent Inflatable-Cells. Both the shape of the person and colours of the person or the thing inside Task-Ins-Cubicle-Local can be presented on this TIC-Robot.

**TIC-Robot-Inflated-Projections:** refers to a combined structure of TIC-Robot-Projections and TIC-Robot-Inflated with transparent Inflatable-Cells. Both the shape of the person and colours of the person or the thing inside Task-Ins-Cubicle-Local can be presented on this TIC-Robot.

**TIC-Person-Virtual:** refers to Task-Ins-Cubicle-Local communicating with a Task-Ins-Cubicle-Remote at Virtual or Semi-Real-Environment, where the person or the thing inside the Task-Ins-Cubicle appear as original and original size and able to communicate with others or act with other things around just as they are in real person in this virtual area.

### Body of the Application:

This is a patent application, extending the abilities and the reach of 3D-Modelling-Systems, the task-ins.-cubicle system telepresence system from task-ins-cubicle local to task-ins-cubicle remote. This application provides a new model to the remote site task-ins-cubicle-remote, i.e., robot presentation of the person or a real mapping of the person to the virtual or semi-real environments.

Initially the focus of this application is for persons, but this same concept shall of course also be applied to other things and animals, where the need arises. It can even be used as a remote manufacturing process, in a similar way.

How can one achieve a presentation of the person at a remote site and still have the complete information of this new site, so one has all the info from this remote site and can feel himself/herself at this site?

A 3D Model of the person(s) or thing(s) is obtained from a prepared mulita-media system, for example such as task-ins-cubicle. In this concept, even a 2D presented in a 3D Model as input is acceptable. So although it makes more sense to use task-ins.-cubicle-local for this, the 3D Modelling information can be received as input from other resources, even from virtually created environments.

There are several methods for generating a hard presentation of the input 3D Model, which are covered within the concept of this application.

All of these however one in common. An integrated multimedia system, for example similar to task-ins-cubicle remote, to send back all the environment vision (video), audio and control info such as sensors info from the remote site. One such a multimedia system is task-ins-node or any other system with all around camera system with camera(s), microphone(s), speakers(s), sensors(s) and with other electronic, mechanic, mechatronic interfaces. See Figure-7.

One of the methods to present the person as a really hard surface person is simply to use TIC-Robot. Figure-1 shows this.

Another method to present the person as a really hard surface person is to use TIC-Robot-Screens. Figure-2 shows this.

A third method to present the person as a really hard surface person is to use TIC-Robot-Projections. Figure-3 and Figure-4 shows an example of these. Please note, preferred method here is to use internal projection. The figure would then look like similar to TIC-Robot-Screens as in Figure-2.

All of the above methods do not change the actual physical shape. Except the size adjustments can be built into the robots so a more realistic presentation of the real person appears. The presentation in TIC-Robot-Screens and TIC-Robot-Projections are almost near to a good social communication with the person at the local site, but not perfect yet.

A fourth method is to use TIC-Robot-Inflated as in Figure-5 and Figure-6.

An extended fifth method is to use TIC-Robot-Inflated-Screens. This is a perfect solution, as morphs the TIC-Robot to the exact dimensions and colours of the person or the thing colours inside the Task-Ins-Cubicle-Local.

An extended sixth method is to use TIC-Robot-Inflated-Projections. This may present an easy way to handle the presentation. In case the projection is done from outside, the projections need to adapt with movements, i.e., for the arms, legs. However, the preferred way is to do the projections from inside.

A seventh method is to use TIC-Person-Virtual, which involves not a hard presentation of the person at the remote site, but full presentation of the person as with 3D Model within the virtual or semi-virtual environment, where the person however can interact with others as they are. Although this is not a hard presentation, but it is a perfect presentation of the person. See Figure-8.

In case one wants more people to visit, then Task-Ins-Cubicle-Remote can be used as a multi-person-point only one can be shown visible and active at a time. Optionally one can use a second Task-Ins-Cubicle-Remote to have the switch point for the active virtual person which is also visible to others. This similar approach can be done with TIC-Robot(s) as well.

The arms and legs of the TIC-Robot can be made virtually and partially visible within Task-Ins-Cubicle-Local such that one can see the actions triggered in the remote-site. One drawback is that the person moves his arms and legs in Task-Ins-Cubicle-Local and they appear as duplication within the surrounding view area. It shall appear a bit unusual. But this is also the case in Augmented Reality, with appearing standard hands to grab things. Here, they can be the persons virtually own arms, hands, legs, feet that are observed within the environment.

### New Innovation:

This innovation extends the capabilities of Task-Ins-Cubicle-System, i.e., the system to be fully present in another remote location with own person, as if the person is really there, interacting with the location in various ways such as talking, walking, controlling remote devices, seeing everything in the area as if one is there. This extends the accustomed way of thinking as one is outside as observer, in all actions. The new approach means the person is in the middle of everything real or imaginary. This shall change the way of thinking for working, education and entertainment.

With Task-Ins-Cubicle-System with Task-Ins-Cubicle-Remote at a real environment, the size of the cubicle, the quality of screens, view angle can present some minor issues. These are removed with this application, in that the person appears as "real" hard, touchable person at the remote site. All other capabilities of this hard touchable person, i.e., mechatronic capabilities are available to the person at local site.

In case of Semi-Real Environment, the person at a Task-Ins-Cubicle-Local wants to visit a second person at a remote site, the second person gets into his/her Task-Ins-Local too and then they meet in a virtual environment with their real person. This virtual environment can be built from the remote-site environment via the online-connection of a Task-Ins-Cubicle-Remote or a Task-Ins-Node at the remote-site. Task-Ins-Cubicle-Local at the remote site can combine Task-Ins-Cubicle-Remote or Task-Ins-Node functionality. Meeting in a virtual environment with virtually real persons with their current appearance and full sizes opens a complete new area to interact with internet and cloud environments.

It is important to note that TIC-Robot at the remote site is not as the robotic industry mainly aims to have a robot with own intelligence and pre-programmed actions and artificial intelligent combined actions, but it is a slave of the person at the local site. TIC-Robots capabilities in some cases may exceed the actual capabilities of the person inside the Task-Ins-Cubicle-Local. But it is still under full control of the person inside TIC-Local.

### End User Advantage of this System:

In a real environment, the system allows for a real appearance of the person as touch and feel presentation and similar abilities of motoric as the person herself/himself. This makes it easier for the person at a local site where she/he uses the virtual transport using 3D modelling of a system, such as task-ins-cubicle local and then to appear somewhere else and interact with this environment with same human abilities. This makes it easy for the person to work at remote sites, to communicate with others at remote sites, to help others at remote sites, to control devices at remote sites and to have a new educational system for the future.

In a virtual environment, the system allows the same capabilities of the person with own motoric controls. It also gives the ability to work with virtual elements in the environment, similar to Augmented Reality Systems.

TIC-Robot and its extended variants allow not only a visitor to morph the robot and start communicating, it also allows usage alone with connection from a virtual media or virtual program. For example, the end user can get a personal assistant with all the knowledge of the internet to assist the person with many things, including house internal controls.

TIC-Robot and its extended variants allow more than one visitors, but only one at a time visible to the host. For better socialising it probably makes sense to have two robots or better even one robot and one Task-Ins-Cubicle-Local acting as Task-Ins-Cubicle-Remote as well, this way two of the visitors can be visible and can see each other as well.

### Advantages & Disadvantages of the Different Technics:

### TIC-Robot:

### Advantages:

1. It takes less place in comparison to task-ins-cubicle-remote.
2. Easy to implement and present.
3. Size adaptions can be integrated.
**4. Blind person can interact.**

### Disadvantages:

1. It does not present the person visually from the local site.
2. At home a Task-Ins-Cubicle-Local can be set to act as a Task-Ins-Cubicle-Remote as well. Not with TIC-Robot. For virtual visits to others, one needs Task-Ins-Cubicle-Local still, when one needs to have a visitor, then an additional TIC-Robot, or usage or Local as Remote is needed.
3. Mouth movements need to be synchronized with the Robot and the person at local site.
4. Blind person cannot recognize the person by touch-contact.
5. Visually not immediately clear if the TIC-Robot is active and in communication. Probably an LED on the body should give this indication. For example, when lit as "green", it is active and running.

### TIC-Robot-Screens:

### Advantages:

1. All the advantages of TIC-Robot.
2. Visual presentation of the person from the local site.
3. Mouth movements can also be displayed.

### Disadvantages:

1. It does not present the person fully with physical dimensions, only the vision.
2. A small distortion due to TiC-Robot surfaces not passing to the person's physical appearance. For example, instead of a round head, it shall appear as long head.
3. It would be difficult to bring screens on the movement joints, so some parts shall not appear as coming from the person at the local site.

### TIC-Robot-Projections:

### Advantages:

1. All the advantages of TIC-Robot-Screens.
2. Probably easier and less expensive to implement.
3. All parts including joint parts can be displayed from the view of the person at the local site. With internal projection, light cables can be used.

### Disadvantages:

1. It does not present the person fully with physical dimensions, only the vision.
2. A small distortion due to TiC-Robot surfaces not passing to the person's physical appearance. For example, instead of a round head, it shall appear as long head.
3. If it is external projection, the projection needs to be synchronized with the moving arms and legs, which bring an extra complexity to the system.
4. If internal projection is used, then it takes an important part of the robot's body which is also used to keep important components, such as power-unit, computation-unit, mechatronics parts, communication-unit, mechanical control parts. A compact solution for the internal projection is needed. In some cases, fibre optic cables or other light carrying media may be necessary.
5. Possible background noise due to cooling system of the projection units.

2. Perfect colour presentation.
3. Moving joints can be covered with inflated cells, as they will not block movements

### Disadvantages:

1. During the morphing phase, some background noise due to inflation action.
2. Inflation time.

### TIC-Robot-Inflated-Projection:

### Advantages:

1. All the advantages of TIC-Robot-Inflated.
2. Good colour presentation.
3. Moving joints can be covered with inflated cells, as they will not block movements

### Disadvantages:

1. During the morphing phase, some background noise due to inflation action.
2. Inflation time.
3. Possible colour issues on the arms and legs during movement.

### TIC-Person-Virtual:

### Advantages:

1. Equal handling from all partners, i.e., from inside Task-Ins-Cubicle-Local.
2. Perfect presentation of people in the media.
3. Usage of Virtual media or Semi-Real Media.
4. Usage of unlimited resources of Virtual Media.

### Disadvantages:

1. Not very suitable for blind people.
2. No physical touch-feeling is possible.
3. Control of real devices in real environment is not possible.
4. A lot of software programming is needed to be able to make visual elements controllable.
5. More internet and cloud resources are used.

### List of Figures:

Figure-1: TIC-Robot replacing the Task-Ins-Cubicle-Remote.
Figure-2: TIC-Robot-Screens replacing the Task-Ins-Cubicle-Remote.
Figure-3: A simple example of TIC-Robot-Projections. Internal projection is preferred but not illustrated.
Figure-4: TIC-Robot-projections with simple external projections above.
Figure-5: Inflation Cell Example for the TIC-Robot-Inflated.
Figure-6: TIC-Robot-Inflated or TIC-Robot-Inflated-Screens or TIC-Robot-Inflated-Projections (internal)
Figure-7: Basic Structure Units for the TIC-Robot
Figure-8: TIC-Person-Virtual. Two persons meeting in a Semi-Real Environment
Figure-9: TIC-Robot Head Inflated Cells combined with display Screens internally
Figure-10: Task-Ins-Cubicle-Local immersive remote environment example display on the concave curved monitors
Figure-11: Task-Ins-Cubicle-Local TIC-Robot and Virtual Environment Interfaces

## Claims

1. Tasks-Ins-Cubicle robot (TIC-Robot), for a system to be fully present in a remote site or location, which is a robotic structure which is configured to communicate with a person at a local site such that this person can see the complete environment around the TIC-Robot and can control all the capabilities of the TIC-Robot as if her/his own, where people around TIC-Robot can communicate and interact with TIC-Robot as if they are communicating and interacting with the person when she/he was personally at the remote location,
**characterized in that** the TIC-Robot has inflatable cell layers on the surface, the TIC-Robot being configured to inflate the inflatable cell layers in accordance with the 3D Model of the person at the local site, such that people around the TIC-Robot can physically recognize the person immediately.

2. TIC-Robot according to Claim-1 comprising display capabilities on the surfaces of the TIC-Robot either as digital display screens or as projection surfaces where projector units from outside or from inside the TIC-Robot or in combination of display screens and projections can be used such that people at the remote site can recognize the person from the local site.

3. TIC-Robot according to Claim-1 comprising movement capabilities such that the person at the local site can move the TIC-Robot either using a simple wheel system or legs of the robotic system and can observe the movement actions at the local site.

4. TIC-Robot according to Claim-1 comprising grab functionalities, such that it can take things from one place and put them to another, where the person at the local site controls such movements directly and can see the results immediately, as comparable to augmented reality.

5. TIC-Robot according to Claim-1 comprising colouring options either integrated to the inflation cells or in combination with Claim-2, i.e. with display screens or with projections or a combination of both.

6. TIC-Robot according to Claim-1 which is configured to also communicate directly with a 3D-Model designed in internet media, such that it can act on this virtual emulation and can communicate and interact with the people at the remote site.

7. TIC-Robot according to Claim-1 which is configured to adjust its size according to the size of the person at the local site.

8. TIC-Robot according to Claim-1 which is also configured to be of any size and shape to allow communication with other things and animals at the local site.

9. System to be fully present in a remote site, comprising a TIC-Robot according to any one of the preceding claims and comprising a local site which is arranged such that a person at the local site can see the complete environment around the TIC-Robot and can control all the capabilities of the TIC-Robot as if her/his own, where people around TIC-Robot can communicate and interact with TIC-Robot as if they are communicating and interacting with the person when she/he was personally at the remote location.

10. Method for communication, wherein a person or a thing or an animal, called here an object at a local site with a 3D-Modelling environment such as Task-Ins-Cubicle-Local, can interact with a TIC-Robot according to one of claims 1 to 8 at a remote site as if they are one of the same and the local site can control the TIC-Robot with or without morphing to its own shape.

## Patentansprüche

1. Tasks-Ins-Cubicle-Roboter (TIC-Roboter) für ein System, um an einem entfernten Ort oder Standort vollständig präsent zu sein, wobei es sich um eine robotische Struktur handelt, die dazu eingerichtet ist, mit einer Person an einem lokalen Standort zu kommunizieren, sodass diese Person die vollständige Umgebung um den TIC-Roboter herum sehen kann und alle Fähigkeiten des TIC-Roboters so steuern kann, als wären es ihre/seine eigenen, wobei Personen um den TIC-Roboter herum mit dem TIC-Roboter kommunizieren und interagieren können, als ob sie mit der Person kommunizieren und interagieren würden, wenn sie/er sich persönlich am entfernten Standort befände,
**dadurch gekennzeichnet, dass** der TIC-Roboter aufblasbare Zellschichten auf der Oberfläche aufweist, wobei der TIC-Roboter dazu eingerichtet ist, die aufblasbaren Zellschichten in Übereinstimmung mit dem 3D-Modell der Person am lokalen Standort aufzublasen, sodass Personen um den TIC-Roboter herum die Person sofort physisch erkennen können.

2. TIC-Roboter nach Anspruch 1, umfassend Anzeigefähigkeiten auf den Oberflächen des TIC-Roboters entweder als digitale Bildschirme oder als Projektionsflächen, wobei Projektoreinheiten von außerhalb oder von innerhalb des TIC-Roboters oder in einer Kombination aus Bildschirmen und Projektionen verwendet werden können, sodass Personen am entfernten Standort die Person vom lokalen Standort erkennen können.

3. TIC-Roboter nach Anspruch 1, umfassend Bewegungsfähigkeiten, sodass die Person am lokalen Standort den TIC-Roboter entweder unter Verwendung eines einfachen Radsystems oder von Beinen des robotischen Systems bewegen kann und die Bewegungsaktionen am lokalen Standort beobachten kann.

4. TIC-Roboter nach Anspruch 1, umfassend Greiffunktionalitäten, sodass er Dinge von einem Ort nehmen und an einen anderen Ort bringen kann, wobei die Person am lokalen Standort solche Bewegungen direkt steuert und die Ergebnisse sofort sehen kann, vergleichbar mit erweiterter Realität.

5. TIC-Roboter nach Anspruch 1, umfassend Färbungsoptionen, entweder in die Aufblaszellen integriert oder in Kombination mit Anspruch 2, d. h. mit Bildschirmen oder mit Projektionen oder mit einer Kombination aus beidem.

6. TIC-Roboter nach Anspruch 1, der dazu eingerichtet ist, auch direkt mit einem in Internetmedien entworfenen 3D-Modell zu kommunizieren, sodass er auf dieser virtuellen Emulation agieren und mit den Personen am entfernten Standort kommunizieren und interagieren kann.

7. TIC-Roboter nach Anspruch 1, der dazu eingerichtet ist, seine Größe entsprechend der Größe der Person am lokalen Standort anzupassen.

8. TIC-Roboter nach Anspruch 1, der auch dazu eingerichtet ist, jede beliebige Größe und Form aufzuweisen, um die Kommunikation mit anderen Dingen und Tieren am lokalen Standort zu ermöglichen.

9. System, um an einem entfernten Standort vollständig präsent zu sein, umfassend einen TIC-Roboter nach einem der vorstehenden Ansprüche und umfassend einen lokalen Standort, der so angeordnet ist, dass eine Person am lokalen Standort die vollständige Umgebung um den TIC-Roboter herum sehen kann und alle Fähigkeiten des TIC-Roboters so steuern kann, als wären es ihre/seine eigenen, wobei Personen um den TIC-Roboter herum mit dem TIC-Roboter kommunizieren und interagieren können, als ob sie mit der Person kommunizieren und interagieren würden, wenn sie/er sich persönlich am entfernten Standort befände.

10. Verfahren zur Kommunikation, wobei eine Person oder ein Ding oder ein Tier, hier als ein Objekt an einem lokalen Standort mit einer 3D-Modellierungsumgebung wie etwa Task-Ins-Cubicle-Local bezeichnet, mit einem TIC-Roboter nach einem der Ansprüche 1 bis 8 an einem entfernten Standort interagieren kann, als ob sie eines und dasselbe wären, und der lokale Standort den TIC-Roboter mit oder ohne Morphing in seine eigene Form steuern kann.

## Revendications

1. Robot Tasks-Ins-Cubicle (robot TIC) pour un système permettant d'être pleinement présent sur un site ou dans un lieu distant, lequel est une structure robotique configurée pour communiquer avec une personne sur un site local de telle sorte que cette personne puisse voir l'environnement complet autour du robot TIC et puisse contrôler toutes les capacités du robot TIC comme si elles étaient les siennes, les personnes autour du robot TIC pouvant communiquer et interagir avec le robot TIC comme si elles communiquaient et interagissaient avec la personne lorsqu'elle/il se trouvait personnellement sur le site distant,
**caractérisé en ce que** le robot TIC comporte des couches cellulaires gonflables sur la surface, le robot TIC étant configuré pour gonfler les couches cellulaires gonflables conformément au modèle 3D de la personne sur le site local, de telle sorte que les personnes autour du robot TIC puissent reconnaître physiquement la personne immédiatement.

2. Robot TIC selon la revendication 1, comprenant des capacités d'affichage sur les surfaces du robot TIC soit sous la forme d'écrans d'affichage numériques, soit sous la forme de surfaces de projection, où des unités de projection situées à l'extérieur ou à l'intérieur du robot TIC, ou une combinaison d'écrans d'affichage et de projections, peuvent être utilisées de telle sorte que les personnes sur le site distant puissent reconnaître la personne du site local.

3. Robot TIC selon la revendication 1, comprenant des capacités de mouvement de telle sorte que la personne sur le site local puisse déplacer le robot TIC soit au moyen d'un système de roues simple, soit au moyen de jambes du système robotique, et puisse observer les actions de mouvement sur le site local.

4. Robot TIC selon la revendication 1, comprenant des fonctionnalités de préhension de telle sorte qu'il puisse prendre des choses d'un endroit et les mettre à un autre, la personne sur le site local contrôlant directement de tels mouvements et pouvant voir les résultats immédiatement, de manière comparable à la réalité augmentée.

5. Robot TIC selon la revendication 1, comprenant des options de coloration soit intégrées aux cellules gonflables, soit en combinaison avec la revendication 2, c'est-à-dire avec des écrans d'affichage ou avec des projections ou avec une combinaison des deux.

6. Robot TIC selon la revendication 1, qui est configuré pour communiquer également directement avec un modèle 3D conçu dans des médias Internet, de telle sorte qu'il puisse agir sur cette émulation virtuelle et puisse communiquer et interagir avec les personnes sur le site distant.

7. Robot TIC selon la revendication 1, qui est configuré pour ajuster également sa taille en fonction de la taille de la personne sur le site local.

8. Robot TIC selon la revendication 1, qui est également configuré pour être de toute taille et de toute forme afin de permettre la communication avec d'autres choses et animaux sur le site local.

9. Système permettant d'être pleinement présent sur un site distant, comprenant un robot TIC selon l'une quelconque des revendications précédentes et comprenant un site local qui est agencé de telle sorte qu'une personne sur le site local puisse voir l'environnement complet autour du robot TIC et puisse contrôler toutes les capacités du robot TIC comme si elles étaient les siennes, les personnes autour du robot TIC pouvant communiquer et interagir avec le robot TIC comme si elles communiquaient et interagissaient avec la personne lorsqu'elle/il se trouvait personnellement sur le site distant.

10. Procédé de communication, dans lequel une personne ou une chose ou un animal, appelé ici un objet sur un site local avec un environnement de modélisation 3D tel que Task-Ins-Cubicle-Local, peut interagir avec un robot TIC selon l'une des revendications 1 à 8 sur un site distant comme s'ils ne faisaient qu'un, et le site local peut contrôler le robot TIC avec ou sans transformation morphologique en sa propre forme.
